# EUROPÄISCHE PATENTSCHRIFT

(11) **EP 3 595 339 B1**
(45) Veröffentlichungstag und Bekanntmachung des Hinweises auf die Patenterteilung: **01.03.2023**
(21) Anmeldenummer: 19185362.1
(22) Anmeldetag: 10.07.2019
(51) Int. Cl.: H04W 4/33, H04W 4/02

(54) **ASSISTENZSYSTEM**
ASSISTANCE SYSTEM
SYSTÈME D'AIDE

(30) Priorität: 11.07.2018 DE 102018211481
(43) Veröffentlichungstag der Anmeldung: 15.01.2020
(73) Patentinhaber: Siemens Schweiz AG, 8047 Zürich (CH)
(72) Erfinder: Frey, Christian, 6314 Unterägeri (CH)
(74) Vertreter: Maier, Daniel Oliver

(56) Entgegenhaltungen:
- WO-A1-2017/137428
- US-A1- 2014 244 437
- US-A1- 2015 025 929

## Beschreibung

Die Erfindung betrifft ein Assistenzsystem, eine Cloud Service Applikation und ein Verfahren zur Unterstützung von Personen, die sich temporär in einem Gebäude aufhalten.

Die Automatisierung von Assistenzsystemen für das Besuchermanagement in öffentlichen Gebäuden oder in Firmengebäuden ist heutzutage oft nur rudimentär vorhanden oder nicht auf die individuellen Bedürfnisse von Besuchern, insbesondere von Erstbesucher, ausgelegt. Dies bedeutet oft unnötige und ineffektive Wege für Besucher zu ihren jeweiligen Zielen. Besucher sind auch Handwerker oder sonstige Dienstleister, die eine Tätigkeit in dem Gebäude verrichten müssen.

Die internationale Patentanmeldung WO2017137428A1 offenbart eine Methode und ein System zur Kundenhilfe und zur Kundenunterstützung in Einzelhandelsgeschäften, basierend auf ein Gebäudepositionsbestimmungssystem (Indoor Positioning), wobei auf Anforderung eines Kunden, ein Verkäufer zum Kunden geführt wird.

Die amerikanische Patentanmeldung US20140244437A1 offenbart ein System zur Kundenunterstützung, bei dem ein Kunde eine Unterstützungsanforderung auf seinem tragbaren Mobilgerät erzeugen kann und diese darauf an ein anderes tragbares Mobilgerät eines Angestellten übertragen wird. Das Kunden-Mobilgerät ist dabei mittels einer Softwareapplikation ausgebildet, die von einem Application Server (=Server) über das Web an das Mobilgerät heruntergeladen werden kann.

Die amerikanische Patentanmeldung US2015025929A1 offenbart ein System zur Kundenunterstützung in einem Laden, wobei auf dem Mobiltelefon des Kunden eine Applikation vorhanden ist, um Hilfe von Angestellten anzufordern, wobei eine Kundenposition identifiziert wird und ein Unterstützungssystem passende Angestellte identifiziert, die entsprechend darüber informiert werden. Dabei wird die Position des Kunden bzw. dessen Mobiltelefons z.B. durch ein Indoor-Positionsbestimmungssystem bestimmt und das System gesendet. Das System kann daraufhin einen nächst befindlichen Angestellten bestimmen, um zur Position des Kunden zu gehen.

Es ist daher die Aufgabe der vorliegenden Erfindung ein effektives und effizientes Assistenzsystem für das Besuchermanagement in Gebäuden bereitzustellen.

Die Aufgabe wird gelöst durch ein Assistenzsystem zur Unterstützung von Personen, die sich temporär in einem Gebäude aufhalten, wobei Assistenzsystem umfasst:
- ein Positionsbestimmungssystem, um im Gebäude befindliche mobile Geräte zu lokalisieren;
- erste mobile Geräte, die jeweils einer Person im Gebäude eindeutig zugeordnet sind, wobei die ersten mobilen Geräte eingerichtet sind, im Zusammenwirken mit dem Positionsbestimmungssystem die aktuelle Position eines der ersten mobilen Gerätes zu bestimmen, wobei die ersten mobilen Geräte weiter eingerichtet sind, ihre aktuelle Position an einen Server zu senden;
- zweite mobile Geräte, die jeweils einem Servicemitarbeiter im Gebäude oder für das jeweilige Gebäude eindeutig zugeordnet sind, wobei die zweiten mobilen Geräte eingerichtet sind, im Zusammenwirken mit dem Positionsbestimmungssystem die aktuelle Position eines der zweiten mobilen Gerätes zu bestimmen, wobei die zweiten mobilen Geräte weiter eingerichtet sind, ihre aktuelle Position an den Server zu senden;
- einen Server, der eingerichtet ist, datentechnisch mit dem Positionsbestimmungssystem, den ersten mobilen Geräten und den zweiten mobilen Geräten zu kommunizieren; wobei der Server weiter eingerichtet ist, auf Anforderung eines der ersten mobilen Geräte für eine Unterstützung der diesem ersten mobilen Gerät zugeordneten jeweiligen Person, ein Wichtigkeitsranking, insbesondere ein Reihenfolgeranking, bezüglich der Anforderung zu erstellen; wobei der Server weiter eingerichtet ist, basierend auf dem Wichtigkeitsranking der Anforderung, der Position des die Anforderung sendenden jeweiligen ersten mobilen Gerätes, und der Position eines jeweiligen zweiten mobilen Gerätes, dem jeweiligen zweiten mobilen Gerät eine Nachricht zur benutzerseitigen Ausgabe zu senden, wobei die Nachricht die Position des jeweiligen ersten mobilen Gerätes umfasst. *Mit Vorteil* handelt es sich bei den ersten und zweiten mobilen Geräten um entsprechend eingerichtete mobile Kommunikationsendgeräte, z.B. Smartphones. Die entsprechende Software (App) für die Smartphones kann z.B. durch einen Internet Download auf die Smartphones geladen werden. Mit Vorteil wird ein Besucher automatisch bei Betreten des Gebäudes darauf hingewiesen, den Download für die Software (App) vorzunehmen, z.B. durch eine optische und/oder akustische Ausgabe einer Meldung auf dem Smartphone. Weiterhin kann ein Link für den Download der App optisch beim Zugang bereitgestellt sein, vorzugsweise als QR Code.

Mit Vorteil umfasst die Nachricht Informationen zur Unterstützung der dem jeweiligen ersten mobilen Gerät zugeordneten Person. Mit Vorteil handelt es sich bei der Nachricht um einen Auftrag. Die Nachricht umfasst individualisierte Handlungsanweisungen zur Unterstützung der dem jeweiligen ersten mobilen Gerät zugeordneten Person. Die jeweiligen individualisierten Handlungsanweisungen für eine jeweilige Person werden basierend auf historischen Daten (z.B. früheren Besuchen der Person) und/oder basierend aus Social-Media-Dateneinträgen der Person abgeleitet.

Mit Vorteil basiert das Bestimmen des Wichtigkeitsrankings für eine Anforderung auf historischen Daten (z.B. früheren Besuchen der Person, VIP-Status) und/oder basierend aus Social-Media-Daten-einträgen der Person. Mit Vorteil werden für das Bestimmen des Wichtigkeitsrankings neuronale Netze und/oder Methoden des Deep Learnings verwendet.

Beim Positionsbestimmungssystem handelt es sich z.B. um ein Indoor-Positionsbestimmungssystem, z.B. basierend auf Beacons (z.B. iBeacons), Bluetooth, oder WLAN.

Eine erste vorteilhafte Ausgestaltung der Erfindung liegt darin, dass der Server weiter eingerichtet ist, basierend auf der Entfernung zwischen dem jeweiligen ersten mobilen Gerät und dem jeweiligen zweiten mobilen Gerät die Nachricht zur Unterstützung der dem jeweiligen ersten mobilen Gerät zugeordneten Person zu senden. So können jeweils die freie Assistenzpersonen (Servicepersonal), die sich am nächsten zu einer Assistenz anfordernden Person befinden, beauftragt werden. Besonders in Notfallsituationen kann somit möglichst schnell eine Assistenz bereitgestellt werden.

Eine weitere vorteilhafte Ausgestaltung der Erfindung liegt darin, dass auf dem Display des jeweiligen zweiten mobilen Geräts beim Empfangen des jeweiligen Auftrages eine grafische und/oder farbliche Codierung ausgegeben wird, basierend auf dem Wichtigkeitsranking der jeweiligen Anforderung. So kann basierend auf dem Wichtigkeitsranking einer Anforderung die Hilfs- bzw. Serviceperson, die die Anforderung erhält, entscheiden, wie schnell sie einem Besucher Hilfe bereitstellt. Weiterhin kann eine Hilfs- bzw. Serviceperson die empfangenen Anforderungen basierend auf dem Wichtigkeitsranking abarbeiten.

Eine weitere vorteilhafte Ausgestaltung der Erfindung liegt darin, dass der Server eingerichtet ist, auf das jeweilige erste mobile Gerät eine Bestätigung der jeweiligen Anforderung zu senden. Mit Vorteil erfolgt dies automatisch. Eine Person, die eine Anforderung absendet, weiss somit, dass ihre Anforderung in Bearbeitung ist.

Eine weitere vorteilhafte Ausgestaltung der Erfindung liegt darin, dass die Bestätigung Reihenfolge und/oder Wartezeit bezüglich der Bearbeitung der Anforderung umfasst. So wird eine Person, die Hilfe oder Unterstützung anfordert, darüber informiert, bis wann diese Hilfe oder Unterstützung zu erwarten ist.

Eine weitere vorteilhafte Ausgestaltung der Erfindung liegt darin, dass die Berechnung der Wartezeit auf der aktuellen Auslastung der Servicemitarbeiter und auf historischen Daten betreffend ähnlichen Anforderungen basiert. Der Server umfasst z.B. einen Speicher (Datenbank) mit historischen Daten (z.B. Startzeit und Abschlusszeit für eine Dienstleistung). Weiterhin umfasst der Server entsprechende Verarbeitungsmittel (Prozessor, Software), um basierend auf den historischen Daten und den aktuellen Daten (z.B. aktuelle Anzahl der Besucher im Gebäude, aktuelle Anzahl an Hilfs- oder Servicepersonal) die jeweilige Wartezeit zu berechnen. Mit Vorteil erfolgt dies mit Methoden der künstlichen Intelligenz (KI), z.B. neuronalen Netzen, Entscheidungstabellen, oder Deep Learning Algorithmen.

Eine weitere vorteilhafte Ausgestaltung der Erfindung liegt darin, dass über das jeweilige zweite mobile Gerät dem Server eine Meldung bei Beendigung der Anforderung gesendet wird. So kann der Server das Ticket für die Anforderung schliessen und die Hilfs- bzw. Serviceperson einer anderen Anforderung zuteilen.

Der Server ist auch dazu eingerichtet, ein Annullieren des Auftrags bzw. einer Anforderung durch die jeweils anfordernde Person zu erfassen.

Eine weitere vorteilhafte Ausgestaltung der Erfindung liegt darin, dass über das jeweilige erste mobile Gerät dem Server eine Meldung über die Zufriedenheit der jeweiligen Anforderung gesendet wird. Mit Vorteil wird auch diese Information mit Methoden der künstlichen Intelligenz (KI), z.B. neuronalen Netzen oder Deep Learning Algorithmen, vom Server verarbeitet. Dadurch können z.B. Verbesserungsmöglichkeiten für die Servicebereitstellung erkannt werden.

Die Aufgabe wird weiterhin gelöst durch ein Verfahren zur Unterstützung von Personen, die sich temporär in einem Gebäude aufhalten,
wobei mittels eines Positionsbestimmungssystems im Gebäude befindliche erste und zweite mobile Geräte lokalisiert werden;
wobei die ersten mobilen Geräte jeweils einer Person im Gebäude eindeutig zugeordnet sind, wobei die ersten mobilen Geräte eingerichtet sind, im Zusammenwirken mit dem Positionsbestimmungssystem die jeweilige Position eines der ersten mobilen Gerätes zu bestimmen;
wobei die zweiten mobilen Geräte jeweils einem Servicemitarbeiter im Gebäude eindeutig zugeordnet sind, wobei die zweiten mobilen Geräte eingerichtet sind, im Zusammenwirken mit dem Positionsbestimmungssystem die jeweilige Position eines der zweiten mobilen Gerätes zu bestimmen;
wobei ein Server eingerichtet ist, datentechnisch mit dem Positionsbestimmungssystem, den ersten mobilen Geräten und den zweiten mobilen Geräten zu kommunizieren;
   wobei der Server weiter eingerichtet ist, auf Anforderung eines der ersten mobilen Geräte für eine Unterstützung der diesem ersten mobilen Gerät zugeordneten jeweiligen Person, ein Wichtigkeitsranking, insbesondere ein Reihenfolgeranking, bezüglich der Anforderung zu erstellen;
   wobei der Server weiter eingerichtet ist, basierend auf dem Wichtigkeitsranking der Anforderung, der Position des die Anforderung sendenden jeweiligen ersten mobilen Gerätes, und der Position eines jeweiligen zweiten mobilen Gerätes, dem jeweiligen zweiten mobilen Gerät eine Nachricht zur Unterstützung der dem jeweiligen ersten mobilen Gerät zugeordneten Person zu senden, wobei die Nachricht die Position des jeweiligen ersten mobilen Gerätes umfasst. Mit Vorteil umfasst die Nachricht Instruktionen zur Unterstützung der dem jeweiligen ersten mobilen Gerät zugeordneten Person. Das Verfahren kann mit Infrastruktur, die sich üblicherweise sowieso schon im Gebäude befindet implementiert bzw. nachgerüstet werden.

Die Aufgabe wird auch gelöst durch eine Cloud Service Applikation zur Unterstützung von Personen, die sich temporär in einem Gebäude aufhalten,
wobei mittels eines Positionsbestimmungssystems im Gebäude befindliche erste und zweite mobile Geräte lokalisiert werden;
wobei die ersten mobilen Geräte jeweils einer Person im Gebäude eindeutig zugeordnet sind, wobei die ersten mobilen Geräte eingerichtet sind, im Zusammenwirken mit dem Positionsbestimmungssystem die aktuelle Position eines der ersten mobilen Gerätes zu bestimmen;
wobei die zweiten mobilen Geräte jeweils einem Servicemitarbeiter im Gebäude eindeutig zugeordnet sind, wobei die zweiten mobilen Geräte eingerichtet sind, im Zusammenwirken mit dem Positionsbestimmungssystem die aktuelle Position eines der zweiten mobilen Gerätes zu bestimmen;
wobei ein Server, insbesondere ein Cloud-Server, eingerichtet ist die Cloud Service Applikation bereitzustellen (z.B. "hosten");
   wobei der Server eingerichtet ist, datentechnisch mit dem Positionsbestimmungssystem, den ersten mobilen Geräten und den zweiten mobilen Geräten zu kommunizieren;
   wobei der Server weiter eingerichtet ist, auf Anforderung eines der ersten mobilen Geräte für eine Unterstützung der diesem ersten mobilen Gerät zugeordneten jeweiligen Person, ein Wichtigkeitsranking, insbesondere ein Reihenfolgeranking, bezüglich der Anforderung zu erstellen;
   wobei der Server weiter eingerichtet ist, basierend auf dem Wichtigkeitsranking der Anforderung, der Position des die Anforderung sendenden jeweiligen ersten mobilen Gerätes, und der Position eines jeweiligen zweiten mobilen Gerätes, dem jeweiligen zweiten mobilen Gerät eine Nachricht zur Unterstützung der dem jeweiligen ersten mobilen Gerät zugeordneten Person zu senden, wobei die Nachricht die Position des jeweiligen ersten mobilen Gerätes umfasst. Mit Vorteil umfasst die Nachricht Instruktionen zur Unterstützung der dem jeweiligen ersten mobilen Gerät zugeordneten Person. Eine Cloud Service Applikation kann leicht in einer Cloud Infrastruktur z.B. als Software-as-a-Service (SaaS) oder als Platform-as-a-Service (PaaS) implementiert werden. Die ersten und zweiten mobilen Geräte (z.B. mobile Kommunikationsendgeräte, z.B. Smartpones) können mit der entsprechenden Software (z.B. durch einen Download vom Internet) für die Cloud Service Applikation eingerichtet werden.

Die Erfindung sowie vorteilhafte Ausführungen der vorliegenden Erfindung werden am Beispiel der nachfolgenden Figuren erläutert. Dabei zeigen:
- FIG 1: ein beispielhaftes Assistenzsystem zur Unterstützung von Personen, die sich temporär in einem Gebäude aufhalten, und
- FIG 2: ein beispielhaftes Flussdiagramm für ein Verfahren zur Unterstützung von Personen, die sich temporär in einem Gebäude aufhalten.

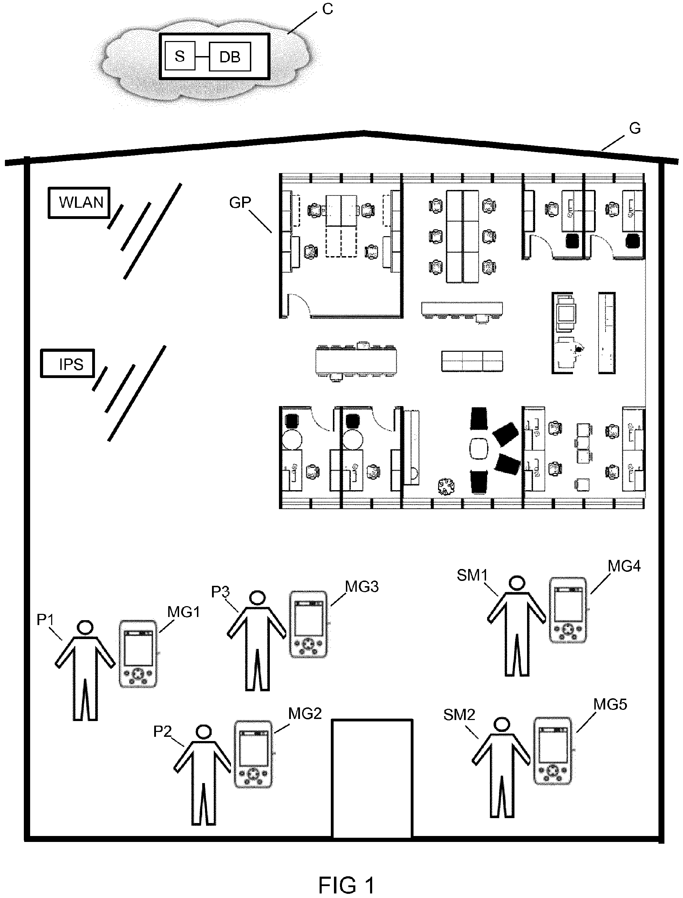

Figur 1 zeigt ein beispielhaftes Assistenzsystem zur Unterstützung von Personen P1 - P3, die sich temporär in einem Gebäude G aufhalten. Das beispielhafte Assistenzsystem umfasst:
ein Positionsbestimmungssystem IPS , um im Gebäude befindliche mobile Geräte MG1 - MG5 zu lokalisieren;
erste mobile Geräte MG1 - MG3, die jeweils einer Person P1 - P3 im Gebäude G eindeutig zugeordnet sind, wobei die ersten mobilen Geräte MG1 - MG3 eingerichtet sind, im Zusammenwirken mit dem Positionsbestimmungssystem IPS die aktuelle Position eines der ersten mobilen Gerätes MG1 - MG3 zu bestimmen, wobei die ersten mobilen Geräte MG1 - MG3 weiter eingerichtet sind, ihre aktuelle Position an einen Server S zu senden;
zweite mobile Geräte MG4, MG5 , die jeweils einem Servicemitarbeiter SM1 im Gebäude G oder für das Gebäude G eindeutig zugeordnet sind, wobei die zweiten mobilen Geräte MG4, MG5 eingerichtet sind, im Zusammenwirken mit dem Positionsbestimmungssystem IPS die aktuelle Position eines der zweiten mobilen Geräte MG4, MG5 zu bestimmen, wobei die zweiten mobilen Geräte MG4, MG5 weiter eingerichtet sind, ihre aktuelle Position an den Server S zu senden;
einen Server S,
   der eingerichtet ist, datentechnisch mit dem Positionsbestimmungssystem IPS, den ersten mobilen Geräten MG1 - MG3 und den zweiten mobilen Geräten MG4, MG5 zu kommunizieren;
   wobei der Server S weiter eingerichtet ist, auf Anforderung eines der ersten mobilen Geräte MG1 - MG3 für eine Unterstützung der diesem ersten mobilen Gerät MG1 - MG3 zugeordneten jeweiligen Person P1 - P3, ein Wichtigkeitsranking, insbesondere ein Reihenfolgeranking, bezüglich der Anforderung zu erstellen;
   wobei der Server S weiter eingerichtet ist, basierend auf dem Wichtigkeitsranking der Anforderung, der Position des die Anforderung sendenden jeweiligen ersten mobilen Gerätes MG1 - MG3, und der Position eines jeweiligen zweiten mobilen Gerätes MG4, MG5, dem jeweiligen zweiten mobilen Gerät MG4, MG5 eine Nachricht zur benutzerseitigen Ausgabe zu senden, wobei die Nachricht die Position des jeweiligen ersten mobilen Gerätes MG1 - MG3 umfasst.

Mit Vorteil werden die Personen P1 - P3 auf das im Gebäude G befindliche Assistenzsystem bzw. auf die Dienste des Assistenzsystems hingewiesen, wenn sie das Gebäude G betreten. Wenn das Positionsbestimmungssystem IPS ein neues mobiles Gerät MG1 - MG3 im Gebäude G erkennt, kann z.B. auf dieses mobile Gerät eine Nachricht mit einem Hinweis auf das Assistenzsystem gesendet werden. Eine Person P1 - P3 kann z.B. über eine entsprechende Quittierung (z.B. über das Aktivieren eines Links einer URL Adresse) sich beim Assistenzsystem und dem Server anmelden. Durch die Aktivierung des Links kann z.B. auch eine entsprechende App (z.B. zur Kommunikation mit dem Assistenzsystem) auf das jeweilige mobile Gerät MG1 - MG3 geladen werden.

Beim Positionsbestimmungssystem IPS handelt es sich mit Vorteil um ein Indoor-Positionsbestimmungssystem, z.B. basierend auf WLAN oder Bluetooth (Z.B. Beacons (z.B. iBeacons) oder BLE). Prinzipiell ist aber auch ein satellitengestütztes Positionsbestimmungssystem (z.B. GPS) verwendbar, insbesondere bei der Verwendung des Assistenzsystems im Freien.

Mit Vorteil handelt es sich bei den mobilen Geräten MG1 - MG5 um entsprechend eingerichtete mobile Kommunikationsendgeräte (z.B. Smartphones, Smartwatches). Die mobilen Geräten MG1 - MG5 verfügen über entsprechende Software (z.B. App) zur Kommunikation mit dem Server und zur Ausgabe von entsprechenden Informationen. Als zweite mobile Geräte MG4, MG5 für die Servicepersonen SM1, SM2 könnten auch entsprechend eingerichtete proprietäre Geräte verwendet werden.

Mit Vorteil ist der Server S in einer Cloudinfrastruktur C implementiert. Die Dienste des Assistenzsystems können somit als Software-as-a-Service (SaaS) oder als Platform-as-a-Service (PaaS) für Gebäudebetreiber angeboten werden.

Beim Server S handelt es sich um einen entsprechend eingerichteten Computer (z.B. Personal Computer, Workstation) mit entsprechender Hardware (Prozessor, Speicher, Kommunikationsschnittstellen) und Software (z.B. KI-Software, wie neuronale Netze, Deep Learning Programme). Der Server S kann auf eine Datenbank DB (z.B. relationale Datenbank, objektorientierte Datenbank oder In-Memory-Datenbank) zugreifen, die historische Daten von früheren Anforderungen umfasst. Basierend auf den historischen Daten können z.B. Wartezeiten für bestimmte Anforderungen ermittelt bzw. abgeschätzt werden.

Mit Vorteil ist der Server S weiter eingerichtet, basierend auf der Entfernung zwischen dem jeweiligen ersten mobilen Gerät MG1 - MG3 und dem jeweiligen zweiten mobilen Gerät MG4, MG5 die Nachricht zur Unterstützung der dem jeweiligen ersten mobilen Gerät MG1 - MG3 zugeordneten Person P1 - P3 zu senden. Die Nachricht kann z.B. als SMS, über einen Messenger oder über einen anderen geeigneten Dienst versendet werden.

Mit Vorteil wird auf dem Display des jeweiligen zweiten mobilen Geräts MG4, MG5 beim Empfangen des jeweiligen Auftrages eine grafische und/oder farbliche Codierung ausgegeben, basierend auf dem Wichtigkeitsranking der jeweiligen Anforderung.

Mit Vorteil ist der Server S eingerichtet auf das jeweilige erste mobile Gerät MG1 - MG3 eine Bestätigung der jeweiligen Anforderung zu senden. Mit Vorteil umfasst die Bestätigung Reihenfolge und/oder Wartezeit bezüglich der Bearbeitung der Anforderung. Mit Vorteil basiert die Berechnung der Wartezeit auf der aktuellen Auslastung der Servicemitarbeiter und auf historischen Daten betreffend ähnlichen Anforderungen. Mit Vorteil wird über das jeweilige zweite mobile Gerät MG4, MG5 dem Server S eine Meldung bei Beendigung der Anforderung gesendet. Dadurch kann der Server das Ticket für diese Anforderung schliessen und die Daten für diese Anforderung (z.B. benötigte Zeit für die Erledigung der Anforderung) in der Datenbank DB für die historischen Daten ablegen.

Mit Vorteil wird über das jeweilige erste mobile Gerät MG1 - MG3 dem Server S eine Meldung über die Zufriedenheit der jeweiligen Anforderung gesendet. Z.B. kann die jeweilige Person P1 - P3 über eine Auswahl auf einer auf dem Display des jeweiligen mobilen Gerätes MG1 - MG3 dargestellten Notenskala (1 bis 6) seine Zufriedenheit dem Server S mitteilen. Die KI-Software auf dem Server S kann diese Information für spätere Anforderungen verwenden. Auch können dadurch die Dienste des Assistenzsystems verbessert werden.

Mit Vorteil umfasst das Assistenzsystem eine Cloud Service Applikation zur Unterstützung von Personen, die sich temporär in einem Gebäude G aufhalten.
wobei mittels des Positionsbestimmungssystems IPS im Gebäude G befindliche erste und zweite mobile Geräte MG1 - MG5 lokalisiert werden;
wobei die ersten mobilen Geräte MG1 - MG3 jeweils einer Person im Gebäude eindeutig zugeordnet sind, wobei die ersten mobilen Geräte MG1 - MG3 eingerichtet sind, im Zusammenwirken mit dem Positionsbestimmungssystem die aktuelle Position eines der ersten mobilen Gerätes MG1 - MG3 zu bestimmen;
wobei die zweiten mobilen Geräte jeweils einem Servicemitarbeiter SM1 - SM2 im Gebäude G eindeutig zugeordnet sind, wobei die zweiten mobilen Geräte MG4, MG5 eingerichtet sind, im Zusammenwirken mit dem Positionsbestimmungssystem IPS die aktuelle Position eines der zweiten mobilen Gerätes MG4, MG5 zu bestimmen;
wobei ein Server S, insbesondere ein Cloud-Server, eingerichtet ist die Cloud Service Applikation bereitzustellen;
   wobei der Server S eingerichtet ist, datentechnisch mit dem Positionsbestimmungssystem, den ersten mobilen Geräten MG1 - MG3 und den zweiten mobilen Geräten MG4, MG5 zu kommunizieren;
   wobei der Server S weiter eingerichtet ist, auf Anforderung eines der ersten mobilen Geräte MG1 - MG3 für eine Unterstützung der diesem ersten mobilen Gerät MG1 - MG3 zugeordneten jeweiligen Person P1 - P3, ein Wichtigkeitsranking, insbesondere ein Reihenfolgeranking, bezüglich der Anforderung zu erstellen;
   wobei der Server S weiter eingerichtet ist, basierend auf dem Wichtigkeitsranking der Anforderung, der Position des die Anforderung sendenden jeweiligen ersten mobilen Gerätes MG1 - MG3, und der Position eines jeweiligen zweiten mobilen Gerätes MG4, MG5, dem jeweiligen zweiten mobilen Gerät MG4, MG5 eine Nachricht zur Unterstützung der dem jeweiligen ersten mobilen Gerät MG1 - MG3 zugeordneten Person P1 - P3 zu senden, wobei die Nachricht die Position des jeweiligen ersten mobilen Gerätes MG1 - MG3 umfasst.

Mit Vorteil wird die Cloud Service Applikation durch den Server S in der Cloudinfrastruktur C realisiert bzw. "gehostet". Die Dienste des Assistenzsystems können somit sehr einfach als Software-as-a-Service (SaaS) oder als Platform-as-a-Service (PaaS) für Gebäudebetreiber angeboten werden. Mit Vorteil sind die ersten und zweiten mobilen Geräte (z.B. mobile Kommunikationsendgeräte, z.B. Smartphones) entsprechend eingerichtet, um mit der Cloud Service Applikation zu kommunizieren.

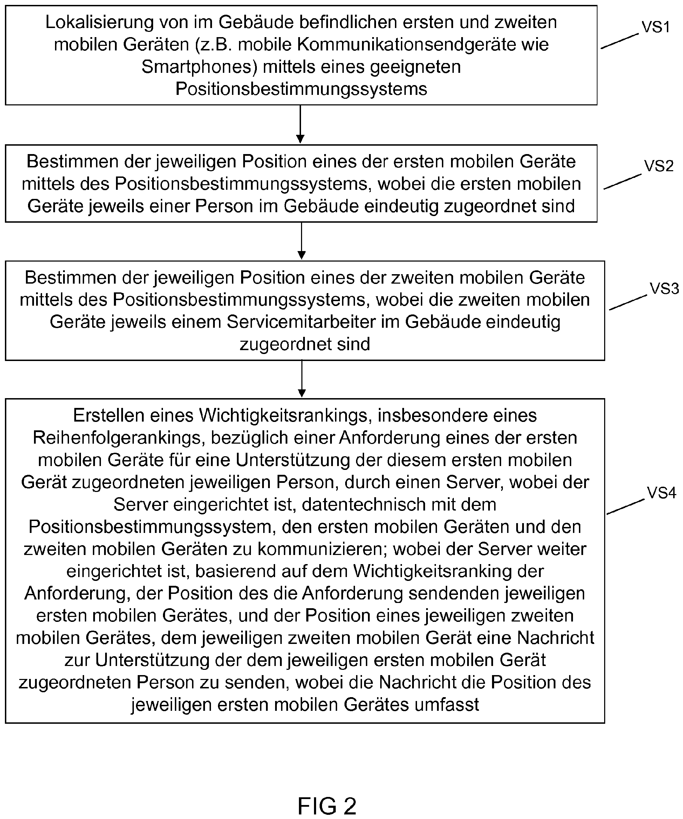

Figur 2 zeigt ein beispielhaftes Flussdiagramm für ein Verfahren zur Unterstützung von Personen, die sich temporär in einem Gebäude aufhalten. Das beispielhafte Verfahren umfasst die Schritte:
(VS1) Lokalisierung von im Gebäude befindlichen ersten und zweiten mobilen Geräten (z.B. mobile Kommunikationsendgeräte wie Smartphones) mittels eines geeigneten Positionsbestimmungssystems;
(VS2) Bestimmen der jeweiligen Position eines der ersten mobilen Geräte mittels des Positionsbestimmungssystems, wobei die ersten mobilen Geräte jeweils einer Person im Gebäude eindeutig zugeordnet sind;
(VS3) Bestimmen der jeweiligen Position eines der zweiten mobilen Geräte mittels des Positionsbestimmungssystems, wobei die zweiten mobilen Geräte jeweils einem Servicemitarbeiter im Gebäude eindeutig zugeordnet sind;
(VS4) Erstellen eines Wichtigkeitsrankings, insbesondere eines Reihenfolgerankings, bezüglich einer Anforderung eines der ersten mobilen Geräte für eine Unterstützung der diesem ersten mobilen Gerät zugeordneten jeweiligen Person, durch einen Server, wobei der Server eingerichtet ist, datentechnisch mit dem Positionsbestimmungssystem, den ersten mobilen Geräten und den zweiten mobilen Geräten zu kommunizieren; wobei der Server weiter eingerichtet ist, basierend auf dem Wichtigkeitsranking der Anforderung, der Position des die Anforderung sendenden jeweiligen ersten mobilen Gerätes, und der Position eines jeweiligen zweiten mobilen Gerätes, dem jeweiligen zweiten mobilen Gerät eine Nachricht zur Unterstützung der dem jeweiligen ersten mobilen Gerät zugeordneten Person zu senden, wobei die Nachricht die Position des jeweiligen ersten mobilen Gerätes umfasst. Das Verfahren lässt sich mit Infrastruktur, die sich sowieso schon in Gebäuden befindet leicht realisieren bzw. nachrüsten.

Beim Positionsbestimmungssystem handelt es sich mit Vorteil um ein Indoor-Positionsbestimmungssystem, z.B. basierend auf WLAN oder Bluetooth (Z.B. Beacons oder BLE). Prinzipiell ist aber auch ein satellitengestütztes Positionsbestimmungssystem (z.B. GPS) verwendbar.

Mit Vorteil handelt es sich bei den mobilen Geräten um entsprechend eingerichtete mobile Kommunikationsendgeräte (z.B. Smartphones, Smartwatches). Die mobilen Geräte verfügen über entsprechende Software (z.B. App) zur Kommunikation mit dem Server und zur Ausgabe von entsprechenden Informationen. Als zweite mobile Geräte für die Servicepersonen könnten auch entsprechend eingerichtete proprietäre Geräte verwendet werden.

Mit Vorteil ist der Server in einer Cloudinfrastruktur implementiert. Die Dienste des Assistenzsystems können somit als Software-as-a-Service (SaaS) oder als Platform-as-a-Service (PaaS) für Gebäudebetreiber angeboten werden.

Die Erfindung wird durch die beigefügten unabhängigen Ansprüche definiert und weitere Ausführungsformen werden durch die abhängigen Ansprüche beschrieben.

### Bezugszeichen

- S: Server
- DB: Datenbank
- C: Cloud
- G: Gebäude
- GP: Gebäudeplan
- IPS: Positionsbestimmungssystem
- WLAN: Kommunikationssystem
- P1 - P3: Person
- SM1, SM2: Servicemitarbeiter
- MG1 - MG5: Mobiles Gerät
- VS1 - VS4: Verfahrensschritt

## Patentansprüche

1. Assistenzsystem zur Unterstützung von Personen (P1 - P3), die sich temporär in einem Gebäude (G) aufhalten, das Assistenzsystem umfasst:
ein Positionsbestimmungssystem (IPS), um im Gebäude (G) befindliche mobile Geräte (MG1 - MG5) zu lokalisieren;
erste mobile Geräte (MG1 - MG3), die jeweils einer Person (P1 - P3) im Gebäude (G) eindeutig zugeordnet sind, wobei die ersten mobilen Geräte (MG1 - MG3) eingerichtet sind, im Zusammenwirken mit dem Positionsbestimmungssystem (IPS) die aktuelle Position eines der ersten mobilen Geräte (MG1 - MG3) zu bestimmen, wobei die ersten mobilen Geräte (MG1 - MG3) weiter eingerichtet sind, ihre aktuelle Position an einen Server (S) zu senden;
zweite mobile Geräte (MG4, MG5), die jeweils einem Servicemitarbeiter (SM1, SM2) im Gebäude oder für das Gebäude (G) eindeutig zugeordnet sind, wobei die zweiten mobilen Geräte (MG4, MG5) eingerichtet sind, im Zusammenwirken mit dem Positionsbestimmungssystem (IPS) die aktuelle Position eines der zweiten mobilen Geräte (MG4, MG5) zu bestimmen, wobei die zweiten mobilen Geräte (MG4, MG5) weiter eingerichtet sind, ihre aktuelle Position an den Server (S) zu senden;
einen Server (S),
der eingerichtet ist, datentechnisch mit dem Positionsbestimmungssystem (IPS), den ersten mobilen Geräten (MG1 - MG3) und den zweiten mobilen Geräten (MG4, MG5) zu kommunizieren;
wobei der Server (S) weiter eingerichtet ist, auf Anforderung eines der ersten mobilen Geräte (MG1 - MG3) für eine Unterstützung der diesem ersten mobilen Gerät (MG1 - MG3) zugeordneten jeweiligen Person (P1 - P3), ein Wichtigkeitsranking bezüglich der Anforderung zu erstellen;
wobei der Server (S) weiter eingerichtet ist, basierend auf dem Wichtigkeitsranking der Anforderung, der Position des die Anforderung sendenden jeweiligen ersten mobilen Gerätes (MG1 - MG3), und der Position eines jeweiligen zweiten mobilen Gerätes (MG4, MG5), dem jeweiligen zweiten mobilen Gerät (MG4, MG5) eine Nachricht zur benutzerseitigen Ausgabe zu senden, wobei die Nachricht die Position des jeweiligen ersten mobilen Gerätes (MG1 - MG3),
**dadurch gekennzeichnet, dass**
die Nachricht individualisierte Handlungsanweisungen zur Unterstützung der dem jeweiligen ersten mobilen Gerät zugeordneten Person (P1 - P3) umfasst, wobei die jeweiligen individualisierten Handlungsanweisungen für eine jeweilige Person (P1 - P3) basierend auf historischen Daten und/oder basierend aus Social-Media-Dateneinträgen der Person ableitbar sind.

2. Assistenzsystem nach Anspruch 1, wobei der Server weiter eingerichtet ist, basierend auf der Entfernung zwischen dem jeweiligen ersten mobilen Gerät (MG1 - MG3) und dem jeweiligen zweiten mobilen Gerät (MG4, MG5) die Nachricht zur Unterstützung der dem jeweiligen ersten mobilen Gerät (MG1 - MG3) zugeordneten Person (P1 - P3) zu senden.

3. Assistenzsystem nach einem der vorstehenden Ansprüche, wobei auf dem Display des jeweiligen zweiten mobilen Geräts (MG4, MG5) beim Empfangen des jeweiligen Auftrages eine grafische und/oder farbliche Codierung ausgegeben wird, basierend auf dem Wichtigkeitsranking der jeweiligen Anforderung.

4. Assistenzsystem nach einem der vorstehenden Ansprüche, wobei der Server (S) eingerichtet ist, auf das jeweilige erste mobile Gerät (MG1 - MG3) eine Bestätigung der jeweiligen Anforderung zu senden.

5. Assistenzsystem nach Anspruch 4, wobei die Bestätigung Reihenfolge und/oder Wartezeit bezüglich der Bearbeitung der Anforderung umfasst.

6. Assistenzsystem nach Anspruch 5, wobei die Berechnung der Wartezeit auf der aktuellen Auslastung der Servicemitarbeiter (SM1, SM2) und auf historischen Daten betreffend ähnlichen Anforderungen basiert.

7. Assistenzsystem nach einem der vorstehenden Ansprüche, wobei über das jeweilige zweite mobile Gerät (MG4, MG5) dem Server (S) eine Meldung bei Beendigung der Anforderung gesendet wird.

8. Assistenzsystem nach einem der vorstehenden Ansprüche, wobei über das jeweilige erste mobile Gerät (MG1 - MG3) dem Server (S) eine Meldung über die Zufriedenheit der jeweiligen Anforderung gesendet wird.

9. Verfahren zur Unterstützung von Personen (P1 - P3), die sich temporär in einem Gebäude (G) aufhalten,
wobei mittels eines Positionsbestimmungssystems (IPS) im Gebäude befindliche erste und zweite mobile Geräte (MG1 - MG5) lokalisiert werden;
wobei die ersten mobilen Geräte (MG1 - MG3) jeweils einer Person (P1 - P3) im Gebäude eindeutig zugeordnet sind, wobei die ersten mobilen Geräte (MG1 - MG3) eingerichtet sind, im Zusammenwirken mit dem Positionsbestimmungssystem (IPS) die jeweilige Position eines der ersten mobilen Geräte (MG1 - MG3) zu bestimmen;
wobei die zweiten mobilen Geräte (MG4, MG5) jeweils einem Servicemitarbeiter (SM1, SM2) im Gebäude (G) eindeutig zugeordnet sind, wobei die zweiten mobilen Geräte (MG4, MG5) eingerichtet sind, im Zusammenwirken mit dem Positionsbestimmungssystem (IPS) die jeweilige Position eines der zweiten mobilen Gerätes (MG4, MG5) zu bestimmen;
wobei ein Server (S) eingerichtet ist, datentechnisch mit dem Positionsbestimmungssystem (IPS), den ersten mobilen Geräten und den zweiten mobilen Geräten (MG1 - MG5) zu kommunizieren;
wobei der Server (S) weiter eingerichtet ist, auf Anforderung eines der ersten mobilen Geräte (MG1 - MG3) für eine Unterstützung der diesem ersten mobilen Gerät (MG1 - MG3) zugeordneten jeweiligen Person (P1 - P3), ein Wichtigkeitsranking bezüglich der Anforderung zu erstellen;
wobei der Server (S) weiter eingerichtet ist, basierend auf dem Wichtigkeitsranking der Anforderung, der Position des die Anforderung sendenden jeweiligen ersten mobilen Gerätes (MG1 - MG3), und der Position eines jeweiligen zweiten mobilen Gerätes (MG4, MG5), dem jeweiligen zweiten mobilen Gerät (MG4, MG5) eine Nachricht zur Unterstützung der dem jeweiligen ersten mobilen Gerät (MG1 - MG3) zugeordneten Person (P1 - P3) zu senden, wobei die Nachricht die Position des jeweiligen ersten mobilen Gerätes (MG1 - MG3) umfasst,
**dadurch gekennzeichnet, dass**
die Nachricht individualisierte Handlungsanweisungen zur Unterstützung der dem jeweiligen ersten mobilen Gerät zugeordneten Person (P1 - P3) umfasst, wobei die jeweiligen individualisierten Handlungsanweisungen für eine jeweilige Person (P1 - P3) basierend auf historischen Daten und/oder basierend aus Social-Media-Dateneinträgen der Person abgeleitet werden.

10. Cloud Service Applikation zur Unterstützung von Personen (P1 - P3), die sich temporär in einem Gebäude aufhalten,
wobei mittels eines Positionsbestimmungssystems (IPS) im Gebäude befindliche erste und zweite mobile Geräte (MG1 - MG5) lokalisiert werden;
wobei die ersten mobilen Geräte (MG1 - MG3) jeweils einer Person (P1 - P3) im Gebäude eindeutig zugeordnet sind, wobei die ersten mobilen Geräte (MG1 - MG3) eingerichtet sind, im Zusammenwirken mit dem Positionsbestimmungssystem (IPS) die aktuelle Position eines der ersten mobilen Gerätes (MG1 - MG3) zu bestimmen;
wobei die zweiten mobilen Geräte (MG4, MG5) jeweils einem Servicemitarbeiter (SM1, SM2) im Gebäude (G) eindeutig zugeordnet sind, wobei die zweiten mobilen Geräte (MG4, MG5) eingerichtet sind, im Zusammenwirken mit dem Positionsbestimmungssystem (IPS) die aktuelle Position eines der zweiten mobilen Gerätes (MG4, MG5) zu bestimmen;
wobei ein Cloud-Server (S), eingerichtet ist die Cloud Service Applikation bereitzustellen;
wobei der Cloud-Server (S) eingerichtet ist, datentechnisch mit dem Positionsbestimmungssystem (IPS), den ersten mobilen Geräten und den zweiten mobilen Geräten (MG1 - MG5) zu kommunizieren;
wobei der Cloud-Server (S) weiter eingerichtet ist, auf Anforderung eines der ersten mobilen Geräte (MG1 - MG3) für eine Unterstützung der diesem ersten mobilen Gerät (MG1 - MG3) zugeordneten jeweiligen Person (P1 - P3), ein Wichtigkeitsranking bezüglich der Anforderung zu erstellen;
wobei der Cloud-Server (S) weiter eingerichtet ist, basierend auf dem Wichtigkeitsranking der Anforderung, der Position des die Anforderung sendenden jeweiligen ersten mobilen Gerätes (MG1 - MG3), und der Position eines jeweiligen zweiten mobilen Gerätes (MG4, MG5), dem jeweiligen zweiten mobilen Gerät (MG4, MG5) eine Nachricht zur Unterstützung der dem jeweiligen ersten mobilen Gerät (MG1 - MG3) zugeordneten Person (P1 - P3) zu senden, wobei die Nachricht die Position des jeweiligen ersten mobilen Gerätes (MG1 - MG3) umfasst,
**dadurch gekennzeichnet, dass**
die Nachricht individualisierte Handlungsanweisungen zur Unterstützung der dem jeweiligen ersten mobilen Gerät zugeordneten Person (P1 - P3) umfasst, wobei die jeweiligen individualisierten Handlungsanweisungen für eine jeweilige Person (P1 - P3) basierend auf historischen Daten und/oder basierend aus Social-Media-Dateneinträgen der Person abgeleitet werden.

## Claims

1. Assistance system for assisting individuals (P1 - P3) temporarily present in a building (G), the assistance system comprising:
a position determining system (IPS), for locating mobile devices (MG1 - MG5) situated in the building (G);
first mobile devices (MG1 - MG3), which are each uniquely associated with an individual (P1 - P3) in the building (G), wherein the first mobile devices (MG1 - MG3) are set up to determine, in cooperation with the position determining system (IPS), the current position of one of the first mobile devices (MG1 - MG3), wherein the first mobile devices (MG1 - MG3) are further set up to send their current position to a server (S);
second mobile devices (MG4, MG5), which are each uniquely associated with a service technician (SM1, SM2) in the building or for the building (G), wherein the second mobile devices (MG4, MG5) are set up to determine, in cooperation with the position determining system (IPS), the current position of one of the second mobile devices (MG4, MG5), wherein the second mobile devices (MG4, MG5) are further set up to send their current position to the server (S);
a server (S),
which is set up to communicate for data processing with the position determining system (IPS), the first mobile devices (MG1 - MG3) and the second mobile devices (MG4, MG5);
wherein the server (S) is further set up to generate, on request from one of the first mobile devices (MG1 - MG3) for assistance for the respective individual (P1 - P3) associated with this first mobile device (MG1 - MG3), an importance ranking in relation to the request;
wherein the server (S) is further set up, on the basis of the importance ranking of the request, the position of the respective first mobile device (MG1 - MG3) sending the request, and the position of a respective second mobile device (MG4, MG5), to send a message to the respective second mobile device (MG4, MG5) for user-side output, wherein the message comprises the position of the respective first mobile device (MG1 - MG3),
**characterised in that**
the message comprises personalised guidance for assisting the individual (P1 - P3) associated with the respective first mobile device, wherein the respective personalised guidance can be derived, for a respective individual (P1 - P3), from historical data and/or from social media data input by the individual.

2. Assistance system according to claim 1, wherein the server (S) is further set up to send the message for assistance for the individual (P1 - P3) associated with the respective first mobile device (MG1 - MG3) on the basis of the distance between the respective first mobile device (MG1 - MG3) and the respective second mobile device (MG4, MG5).

3. Assistance system according to one of the preceding claims, wherein a graphical and/or colour coding is output on the display of the respective second mobile device (MG4, MG5) on receipt of the respective task, on the basis of the importance ranking of the respective request.

4. Assistance system according to one of the preceding claims, wherein the server (S) is set up to send confirmation of the respective request to the respective first mobile device (MG1 - MG3).

5. Assistance system according to claim 4, wherein the confirmation comprises a queue rank and/or waiting time relating to processing of the request.

6. Assistance system according to claim 5, wherein calculation of the waiting time is based on the current workload of the service technicians (SM1, SM2) and on historical data relating to similar requests.

7. Assistance system according to one of the preceding claims, wherein a report is sent to the server (S) via the respective second mobile device (MG4, MG5) on completion of the request.

8. Assistance system according to one of the preceding claims, wherein a report is sent to the server (S) via the respective first mobile device (MG1 - MG3) about the level of satisfaction related to the respective request.

9. Method for assisting individuals (P1 - P3) temporarily present in a building (G),
wherein first and second mobile devices (MG1 - MG5) situated in the building are located using a position determining system (IPS);
wherein the first mobile devices (MG1 - MG3) are each uniquely associated with an individual (P1 - P3) in the building, wherein the first mobile devices (MG1 - MG3) are set up to determine, in cooperation with the position determining system (IPS), the respective position of one of the first mobile devices (MG1 - MG3);
wherein the second mobile devices (MG4, MG5) are each uniquely associated with a service technician (SM1, SM2) in the building, wherein the second mobile devices (MG4, MG5) are set up to determine, in cooperation with the position determining system (IPS), the respective position of one of the second mobile devices (MG4, MG5);
wherein a server (S) is set up to communicate for data processing with the position determining system (IPS), the first mobile devices and the second mobile devices (MG1 - MG5) ;
wherein the server (S) is further set up to generate, on request from one of the first mobile devices (MG1 - MG3) for assistance for the respective individual (P1 - P3) associated with this first mobile device (MG1 - MG3), an importance ranking in relation to the request;
wherein the server (S) is further set up, on the basis of the importance ranking of the request, the position of the respective first mobile device (MG1 - MG3) sending the request, and the position of a respective second mobile device (MG4, MG5), to send a message to the respective second mobile device (MG4, MG5) for assistance for the individual (P1 - P3) associated with the respective first mobile device (MG1 - MG3), wherein the message comprises the position of the respective first mobile device (MG1 - MG3),
**characterised in that**
the message comprises personalised guidance for assisting the individual (P1 - P3) associated with the respective first mobile device, wherein the respective personalised guidance can be derived, for a respective individual (P1 - P3), from historical data and/or from social media data input by the individual.

10. Cloud service application for assisting individuals (P1 - P3) temporarily present in a building,
wherein first and second mobile devices (MG1 - MG5) situated in the building are located using a position determining system (IPS);
wherein the first mobile devices (MG1 - MG3) are each uniquely associated with an individual (P1 - P3) in the building, wherein the first mobile devices (MG1 - MG3) are set up to determine, in cooperation with the position determining system (IPS), the current position of one of the first mobile devices (MG1 - MG3);
wherein the second mobile devices (MG4, MG5) are each uniquely associated with a service technician (SM1, SM2) in the building (G), wherein the second mobile devices (MG4, MG5) are set up to determine, in cooperation with the position determining system (IPS), the current position of one of the second mobile devices (MG4, MG5);
wherein a cloud server (S) is set up to provide the cloud service application;
wherein the cloud server (S) is set up to communicate for data processing with the position determining system (IPS), the first mobile devices and the second mobile devices (MG1 - MG5) ;
wherein the cloud server (S) is further set up to generate, on request from one of the first mobile devices (MG1 - MG3) for assistance for the respective individual (P1 - P3) associated with this first mobile device (MG1 - MG3), an importance ranking in relation to the request;
wherein the cloud server (S) is further set up, on the basis of the importance ranking of the request, the position of the respective first mobile device (MG1 - MG3) sending the request, and the position of a respective second mobile device (MG4, MG5), to send a message to the respective second mobile device (MG4, MG5) for assistance for the individual (P1 - P3) associated with the respective first mobile device (MG1 - MG3), wherein the message comprises the position of the respective first mobile device (MG1 - MG3),
**characterised in that**
the message comprises personalised guidance for assisting the individual (P1 - P3) associated with the respective first mobile device, wherein the respective personalised guidance can be derived, for a respective individual (P1 - P3), from historical data and/or from social media data input by the individual.

## Revendications

1. Système d'assistance pour aider des personnes (P1 - P3) qui se trouvent temporairement dans un bâtiment (G), le système d'assistance comprend :
un système de détermination de position (IPS) pour localiser les appareils mobiles (MG1 - MG5) situés dans le bâtiment (G) ;
de premiers appareils mobiles (MG1 - MG3) qui sont chacun associés uniquement à une personne (P1 - P3) dans le bâtiment (G), les premiers appareils mobiles (MG1 - MG3) étant conçus pour déterminer, en coopération avec le système de détermination de position (IPS), la position actuelle de l'un des premiers appareils mobiles (MG1 - MG3), les premiers appareils mobiles (MG1 - MG3) étant en outre conçus pour envoyer leur position actuelle à un serveur (S) ;
de deuxièmes appareils mobiles (MG4, MG5), qui sont chacun associés uniquement à un agent de service (SM1, SM2) dans le bâtiment ou pour le bâtiment (G), les deuxièmes appareils mobiles (MG4, MG5) étant agencés pour déterminer, en coopération avec le système de détermination de position (IPS), la position actuelle de l'un des deuxièmes appareils mobiles (MG4, MG5), les deuxièmes appareils mobiles (MG4, MG5) étant en outre agencés pour envoyer leur position actuelle au serveur (S) ;
un serveur (S),
qui est conçu pour communiquer, en termes de données, avec le système de détermination de position (IPS), les premiers appareils mobiles (MG1 - MG3) et les deuxièmes appareils mobiles (MG4, MG5) ;
dans lequel le serveur (S) est en outre agencé, à la demande de l'un des premiers dispositifs mobiles (MG1 - MG3) pour une assistance de la personne respective (P1 - P3) associée à ce premier dispositif mobile (MG1 - MG3), pour établir un classement d'importance concernant la demande ;
dans lequel le serveur (S) est en outre agencé, sur la base du classement d'importance de la demande, de la position du premier dispositif mobile respectif (MG1 - MG3) envoyant la demande, et de la position d'un deuxième dispositif mobile respectif (MG4, MG5), pour envoyer un message au deuxième dispositif mobile respectif (MG4, MG5) pour une sortie côté utilisateur, le message indiquant la position du premier dispositif mobile respectif (MG1 - MG3),
**caractérisé en ce que** le message comprend des instructions d'action individualisées pour aider la personne (P1 - P3) associée au premier appareil mobile respectif, les instructions d'action individualisées respectives pour une personne respective (P1 - P3) pouvant être déduites sur la base de données d'archive et/ou sur la base d'entrées de données de médias sociaux concernant la personne.

2. Système d'assistance selon la revendication 1, dans lequel le serveur est en outre agencé pour envoyer, sur la base de la distance entre le premier appareil mobile respectif (MG1 - MG3) et le deuxième appareil mobile respectif (MG4, MG5), le message d'aide à la personne (P1 - P3) associée au premier appareil mobile respectif (MG1 - MG3).

3. Système d'assistance selon l'une des revendications précédentes, dans lequel un codage graphique et/ou en couleur est émis sur l'écran du deuxième appareil mobile respectif (MG4, MG5) lors de la réception de la commande respective, sur la base du classement d'importance de la demande respective.

4. Système d'assistance selon l'une des revendications précédentes, dans lequel le serveur (S) est agencé pour envoyer sur le premier appareil mobile respectif (MG1 - MG3) une confirmation de la demande respective.

5. Système d'assistance selon la revendication 4, dans lequel la confirmation comprend l'ordre et/ou le temps d'attente concernant le traitement de la demande.

6. Système d'assistance selon la revendication 5, dans lequel le calcul du temps d'attente est basé sur la charge de travail actuelle des agents de service (SM1, SM2) et sur des données d'archive concernant des demandes similaires.

7. Système d'assistance selon l'une des revendications précédentes, dans lequel un message est envoyé au serveur (S) par l'intermédiaire du deuxième appareil mobile respectif (MG4, MG5) à la fin de la requête.

8. Système d'assistance selon l'une des revendications précédentes, dans lequel un message de satisfaction de la demande respective est envoyé au serveur (S) par l'intermédiaire du premier appareil mobile respectif (MG1 - MG3).

9. Procédé d'aide à des personnes (P1 - P3) qui se trouvent temporairement dans un bâtiment (G),
dans lequel de premiers et deuxièmes appareils mobiles (MG1 - MG5) se trouvant dans le bâtiment sont localisés au moyen d'un système de détermination de position (IPS) ;
les premiers appareils mobiles (MG1 - MG3) étant associés chacun uniquement à une personne (P1 - P3) dans le bâtiment, les premiers appareils mobiles (MG1 - MG3) étant agencés pour déterminer, en coopération avec le système de détermination de position (IPS), la position respective de l'un des premiers appareils mobiles (MG1 - MG3) ;
les deuxièmes appareils mobiles (MG4, MG5) étant respectivement associés uniquement à un agent de service (SM1, SM2) dans le bâtiment (G), les deuxièmes appareils mobiles (MG4, MG5) étant agencés pour déterminer, en coopération avec le système de détermination de position (IPS), la position respective de l'un des deuxièmes appareils mobiles (MG4, MG5) ;
dans lequel un serveur (S) est agencé pour communiquer, en termes de données, avec le système de détermination de position (IPS), les premiers dispositifs mobiles et les deuxièmes dispositifs mobiles (MG1 - MG5) ;
dans lequel le serveur (S) est en outre agencé, à la demande de l'un des premiers dispositifs mobiles (MG1 - MG3) pour une aide à la personne respective (P1 - P3) associée à ce premier dispositif mobile (MG1 - MG3), pour établir un classement d'importance concernant la demande ;
dans lequel le serveur (S) est en outre agencé, sur la base du classement d'importance de la demande, de la position du premier appareil mobile respectif (MG1 - MG3) envoyant la demande, et de la position d'un deuxième appareil mobile respectif (MG4, MG5), pour envoyer au deuxième appareil mobile respectif (MG4, MG5) un message pour aider la personne (P1 - P3) associée au premier appareil mobile respectif (MG1 - MG3), le message comprenant la position du premier appareil mobile respectif (MG1 - MG3),
**caractérisé en ce que** le message comprend des instructions d'action individualisées pour aider la personne (P1 - P3) associée au premier appareil mobile respectif, les instructions d'action individualisées respectives pour une personne respective (P1 - P3) étant dérivées sur la base de données d'archive et/ou sur la base d'entrées de données de médias sociaux concernant la personne.

10. Application de service dans le nuage pour l'assistance à des personnes (P1 - P3) qui se trouvent temporairement dans un bâtiment,
dans laquelle de premiers et deuxièmes appareils mobiles (MG1 - MG5) se trouvant dans le bâtiment sont localisés au moyen d'un système de détermination de position (IPS) ;
les premiers appareils mobiles (MG1 - MG3) étant associés chacun uniquement à une personne (P1 - P3) dans le bâtiment, les premiers appareils mobiles (MG1 - MG3) étant agencés pour déterminer, en coopération avec le système de détermination de position (IPS), la position actuelle de l'un des premiers appareils mobiles (MG1 - MG3) ;
les deuxièmes appareils mobiles (MG4, MG5) étant associés chacun uniquement à un agent de service (SM1, SM2) dans le bâtiment (G), les deuxièmes appareils mobiles (MG4, MG5) étant agencés pour déterminer, en coopération avec le système de détermination de position (IPS), la position actuelle de l'un des deuxièmes appareils mobiles (MG4, MG5) ;
dans laquelle un serveur dans le nuage (S) est configuré pour fournir l'application de service dans le nuage ;
dans laquelle le serveur dans le nuage (S) est agencé pour communiquer en termes de données avec le système de détermination de position (IPS), les premiers dispositifs mobiles et les deuxièmes dispositifs mobiles (MG1 - MG5) ;
dans laquelle le serveur dans le nuage (S) est en outre agencé, à la demande de l'un des premiers dispositifs mobiles (MG1 - MG3) pour une aide à la personne respective (P1 - P3) associée à ce premier dispositif mobile (MG1 - MG3), pour établir un classement d'importance concernant la demande ;
dans laquelle le serveur dans le nuage (S) est en outre agencé, sur la base du classement d'importance de la demande, de la position du premier dispositif mobile respectif (MG1 - MG3) envoyant la demande, et de la position d'un deuxième dispositif mobile respectif (MG4, MG5), pour envoyer au deuxième dispositif mobile respectif (MG4, MG5) un message pour aider la personne (P1 - P3) associée au premier dispositif mobile respectif (MG1 - MG3), le message comprenant la position du premier dispositif mobile respectif (MG1 - MG3),
**caractérisée en ce que** le message comprend des instructions d'action individualisées pour aider la personne (P1 - P3) associée au premier appareil mobile respectif, les instructions d'action individualisées respectives pour une personne respective (P1 - P3) étant dérivées sur la base de données d'archive et/ou sur la base d'entrées de données de médias sociaux concernant la personne.
